(19) Europäisches Patentamt

European Patent Office

Office européen des brevets

(11) Veröffentlichungsnummer : **0 193 488**
**B1**

(12) **EUROPÄISCHE PATENTSCHRIFT**

(45) Veröffentlichungstag der Patentschrift :
19.10.88

(21) Anmeldenummer : 86730008.9

(22) Anmeldetag : 20.01.86

(51) Int. Cl.⁴ : **C 21 B 13/14**

(54) **Verfahren und Vorrichtung zur Erzeugung von Eisenschwammpartikeln und flüssigem Roheisen.**

(30) Priorität : 06.02.85 DE 3504346

(43) Veröffentlichungstag der Anmeldung :
03.09.86 Patentblatt 86/36

(45) Bekanntmachung des Hinweises auf die Patenterteilung : 19.10.88 Patentblatt 88/42

(84) Benannte Vertragsstaaten :
AT BE DE FR GB IT LU NL SE

(56) Entgegenhaltungen :
EP-A- 0 111 176
DE-A- 1 433 326
GB-A-   609 029
US-A- 2 577 295
US-A- 4 169 533
US-A- 4 299 694

(73) Patentinhaber : Korf Engineering GmbH
Neusser Strasse 111
D-4000 Düsseldorf 1 (DE)

(72) Erfinder : Vuletic, Bogdan
Bilker Strasse 19
D-4000 Düsseldorf (DE)

(74) Vertreter : Pfenning, Meinig & Partner
Mozartstrasse 17
D-8000 München 2 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Erzeugung von Eisenschwammpartikeln und flüssigem Roheisen aus stückigem Eisenerz, bei dem das Eisenerz in einem Direktreduktionsaggregat mittels eines Reduktionsgases zu Eisenschwamm reduziert wird, und die aus dem Direktreduktionsaggregat ausgetragenen Eisenschwammpartikel in eine Feinkornfraktion und in eine Grobkornfraktion getrennt werden, wobei die Feinkornfraktion einem Einschmelzvergaser zugeführt wird, in dem aus eingebrachter Kohle und eingeblasenem sauerstoffhaltigem Gas die zum Schmelzen der Feinkornfraktion des Eisenschwamms erforderliche Wärme sowie Reduktionsgas erzeugt werden, von dem wenigstens ein Teil in das Direktreduktionsaggregat eingeleitet wird.

Die Erfindung betrifft weiterhin eine Vorrichtung zur Durchführung dieses Verfahrens.

Ein Verfahren der vorstehend genannten Art ist aus der EP-A-111 176 bekannt. Dieses Verfahren beruht auf dem Umstand, daß bei Einbringen des gesamten Eisenschwamms in den Einschmelzvergaser bei dessen Einschmelzen mehr Reduktionsgas erzeugt wird, als für die Reduktion des Eisenerzes zur Erzeugung der gleichen Eisenschwammenge erforderlich ist. Dies ist besonders der Fall bei Kohlen mit hohem Gehalt an flüchtigen Bestandteilen. Um das überschüssige Reduktionsgas zu verwerten, muß daher die Roheisenerzeugungsanlage mit anderen, Energie in Form von Reduktionsgas benötigenden Anlagen gekoppelt werden. Dies kann jedoch zu technischen Schwierigkeiten führen und ist häufig auch ökonomisch nicht sinnvoll. Ein weiterer Grund für die Anwendung des bekannten Verfahrens besteht darin, daß bei mehreren Stahlwerken freie Kapazitäten zum Einschmelzen des Eisenschwamms vorhanden sind.

Die ausgeschiedene Grobkornfraktion des Eisenschwamms wird in bekannter Weise weiterverarbeitet, das heißt, er kann entweder in heißem Zustand einem weiteren Einschmelzgefäß, beispielsweise einem Lichtbogenofen, zugeführt werden oder aber auch heißbrikettiert, passiviert oder gekühlt werden, um als Einsatzmaterial für einen Schmelzofen zur Verfügung zu stehen.

Bei dem bekannten Verfahren wird in die Verbindungsleitung zwischen dem Direktreduktionsaggregat und dem Einschmelzvergaser ein Grobkornabscheider eingefügt, dessen Austrittsöffnung für die Feinkornfraktion mit dem Einschmelzvergaser und dessen Austrittsöffnung für die Grobkornfraktion mit einem gesonderten Einschmelzaggregat oder mit einer Einrichtung zum Heißbrikettieren, Heißkompaktieren, Passivieren oder Kühlen verbunden ist. Dabei ist der Grobkornabscheider in Form einer schrägen Fallrinne mit wenigstens einem von diesen nach unten abzweigenden Stutzen ausgebildet, in der sich bei der Förderung des Schüttgutes die feinen Partikel unten absetzen und über den Stutzen dosiert abziehbar sind, während die groben Partikel weitergeleitet werden. In einer anderen Ausbildung enthält der Grobkornabscheider ein thermisch belastbares Sieb oder einen Rost.

Der bei einem bekannten Verfahren verwendete Grobkornabscheider weist jedoch einige Nachteile auf. So kann er nicht an unterschiedliche Betriebsbedingungen angepaßt werden, beispielsweise wenn das Mengenverhältnis zwischen Feinkornfraktion oder Grobkornfraktion geändert werden soll oder wenn sich die mittlere Partikelgröße des Eisenschwamms verändert. Außerdem ist bei dem Grobkornabscheider in Form einer schrägen Fallrinne eine saubere Trennung von Fein- oder Grobkornfraktion nicht möglich. Auch besteht die Gefahr eines Verklebens der Eisenschwammteilchen und bei Verwendung eines Siebes zum Trennen der Eisenschwammpartikel kann sich dessen Maschenweite verändern, indem der heiße und zum Kleben neigende Eisenschwamm an den Maschen haften bleibt.

Es ist daher die Aufgabe der vorliegenden Erfindung ein Verfahren der anfangs genannten Art in der Weise auszubilden, daß eine sehr genaue Trennung zwischen Feinkornfraktion und Grobkornfraktion durchgeführt werden kann und daß das Mengenverhältnis zwischen Feinkornfraktion und Grobkornfraktion auf einfache Weise und sehr genau eingestellt werden kann.

Diese Aufgabe wird erfindungsgemäß dadurch gelöst, daß die aus dem Direktreduktionsaggregat ausgetragenen Eisenschwammpartikel zu deren Trennung in die Fein- und Grobkornfraktion in einen Windsichter eingebracht werden, der im Gegenstrom zu den Eisenschwammpartikeln von einem Kühlgas mit vorbestimmter Geschwindigkeit durchströmt wird, daß ein Teil dieses Kühlgasstromes in einem Zyklon grob entstaubt und nach Waschen, Kühlen und Verdichten wieder als Kühlgas verwendet wird, daß der andere Teil dem in einem Einschmelzvergaser erzeugten Reduktionsgas zugemischt wird, daß das Gemisch aus Reduktions- und Kühlgas und die mit diesen mitgenommene Feinkornfraktion zu einem Zyklon geführt werden und das von der Feinkornfraktion befreite Gasgemisch in das Direktreduktionsaggregat geleitet wird, daß die in den Zyklonen ausgeschiedene Feinkornfraktion in den Einschmelzvergaser eingeblasen wird und daß die Grobkornfraktion aus dem Windsichter über ein Pufferaggregat ausgetragen wird.

Vorzugsweise wird die Gasgeschwindigkeit im Windsichter so gewählt, daß die Feinkornfraktion Eisenschwammpartikel bis zu einer Größe von ca. 5 mm enthält. Die Größe der ausgeschiedenen Partikel richtet sich auch nach dem gewünschten Schwefelgehalt des ausgetragenen Eisenschwamms.

Die Feinkornfraktion bindet nämlich wegen der auf das Gewicht bezogenen größeren Oberfläche der feinen Eisenschwammpartikel einen größeren Anteil des im Reduktionsgas enthaltenen Schwefels als die Grobkornfraktion.

Die Gasgeschwindigkeit im Windsichter bzw. die Größe der ausgetragenen Partikel wird durch die Kühlgasmenge und mit Hilfe einer Regelarmatur, die im By-pass zum Windsichter installiert wird, eingestellt. Die Einstellung der Reduktionsgastemperatur erfolgt unabhängig davon, und zwar durch Abzweigung eines Teils des im Pufferaggregat und Windsichter vorgewärmten Kühlgases und seine Beimischung zum Reduktionsgas aus dem Einschmelzvergaser. Diese aus dem Kühlgaskreislauf abgezweigte Gasmenge wird bei Anlagen mit $CO_2$-Wäsche durch das aufbereitete Gichtgas, bei Anlagen ohne $CO_2$-Wäsche durch das Reduktionsgas ersetzt. Vor dem Eintritt in den Windsichter wird das Kühlgas zur Kühlung der abgetrennten Grobkornfraktion des Eisenschwamms dienen. Soll die Grobkornfraktion heiß ausgetragen werden, beispielsweise zur Heißbrikettierung, dann wird das Kühlgas vorteilhaft oberhalb der sich in einem Pufferaggregat versammelnden Grobkornfraktion eingeblasen, wobei es vorzugsweise zusätzlich vorgewärmt wird.

Die Feinkornfraktion des Kühlgases und der Reduktionsstaub werden in Zyklonen ausgeschieden und mit Hilfe des $CO_2$-haltigen Gichtgases über Staubbrenner in den Einschmelzvergaser eingeblasen.

Beim erfindungsgemäßen Verfahren wird dem Einschmelzvergaser nicht die gesamte Menge der im Direktreduktionsaggregat erzeugten Eisenschwammpartikel zugeführt, sondern nur ein Teil, so daß beim Einschmelzen dieser Teilmenge ein Überschuß an Wärme im Einschmelzvergaser vorhanden ist. Dadurch ist es möglich, einen Teil des Sauerstoffs durch $CO_2$-haltiges Gichtgas des Reduktionsaggregats zu ersetzen und einen Teil der Kohle durch die endothermen Reaktionen mit diesem Gas zu vergasen.

Bei der Vorrichtung zur Durchführung des vorliegenden Verfahrens ist das Direktreduktionsaggregat oberhalb des Einschmelzvergasers angeordnet und weist am unteren Ende eine Austragsvorrichtung für den heißen Eisenschwamm auf, an die ein Windsichter angeschlossen ist, der eine obere Austrittsöffnung für die Feinkornfraktion zur Verbindung mit den Zyklonen, eine untere Austrittsöffnung für die Grobkornfraktion zur Verbindung mit dem Kühl- bzw. Pufferaggregat aufweist.

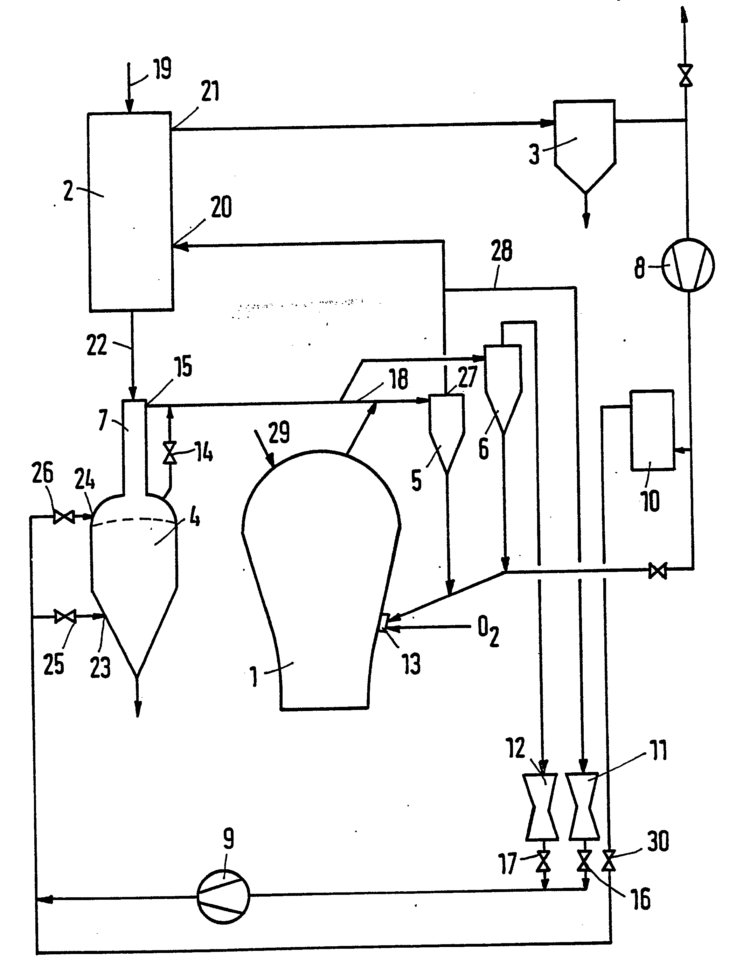

Die Erfindung wird im folgenden anhand eines in der Figur dargestellten Ausführungsbeispiels näher erläutert. Die Figur zeigt in schematischer Darstellung eine Anlage zur Erzeugung von Eisenschwammpartikeln und flüssigem Roheisen aus stückigem Eisenerz.

Die Anlage enthält einen Einschmelzvergaser, über dem ein Direktreduktions-Schachtofen 2 angeordnet ist. Diesem Schachtofen 2 wird von oben stückiges Eisenerz zugeführt, wie durch einen Pfeil 19 angedeutet ist, das in Form einer losen Schüttung im Schachtofen absinkt und mittels eines über einen Gaseinlaß 20 eingeblasenen heißen Reduktionsgases mit einer Temperatur von etwa 750 bis 900 °C zu Eisenschwamm reduziert wird. Das verbrauchte Reduktionsgas verläßt als Abgas den Schachtofen 2 über einen oberen Gasauslaß 21.

Der durch Reduktion des stückigen Eisenerzes erzeugte heiße Eisenschwamm wird mit einer Temperatur von etwa 750° bis 850 °C unten aus dem Schachtofen 2 ausgetragen und gelangt über ein Rohr 22 in einen der Trennung der Eisenschwammpartikel in eine Feinkornfraktion und eine Grobkornfraktion dienenden Windsichter 7. Das Rohr 22 ist am unteren Ende abgeknickt oder es weist andere Bremsmittel auf, so daß der Eisenschwamm mit einer möglichst geringen Geschwindigkeit und gut verteilt in den Windsichter 7 gelangt. An den Windsichter 7 ist ein Kühl- bzw. Pufferaggregat (4) für die Grobkornfraktion des Eisenschwamms angeschlossen. In dieses Aggregat wird entweder über einen unteren Gaseinlaß 23 oder einen oberen Gaseinlaß 24 Kühlgas eingeblasen. Zur Auswahl entweder des Gaseinlasses 23 oder des Gaseinlasses 24 dienen Ventile 25 und 26. Das in das Kühl- bzw. Pufferaggregat eingeblasene Kühlgas strömt nach oben in den Windsichter 7. Hierbei trifft es im Gegenstrom auf die über das Rohr 22 eingebrachten Eisenschwammpartikel. Die Geschwindigkeit des Kühlgases im Windsichter 7 wird durch die Drosselarmatur 14 eingestellt. Diese Geschwindigkeit läßt sich ohne weiteres in einem weiten Bereich variieren. Sie bestimmt im wesentlichen das Mengenverhältnis der Feinkornfraktion zur Grobkornfraktion der getrennten Eisenschwammpartikel.

Das aus dem Gasauslaß 15 austretende Gas führt einen Teil der über das Rohr 22 in den Windsichter 7 eingebrachten Koks- und Eisenschwammpartikel, nämlich die Feinkornfraktion mit sich. Die maximale Partikelgröße der Feinkornfraktion wird hierbei durch die Strömungsgeschwindigkeit des Kühlgases bestimmt. Diese Geschwindigkeit läßt sich, wie bereits erwähnt, ohne Schwierigkeiten auf einen gewünschten Wert einstellen.

Ein Teil des Kühlgases aus dem Windsichter 7 wird über die Leitung 18 abgezweigt, im Zyklon 6 grob entstaubt, im Wäscher 12 gewaschen und gekühlt, vom Gebläse 9 verdichtet und wieder als Kühlgas verwendet. Die restliche Menge wird dem Reduktionsgas aus dem Einschmelzvergaser 1 beigemischt, um die erforderliche Temperatur für das Reduktionsaggregat 2 einzustellen. Die gleiche Menge kann ebenfalls aus dem den Zyklon 5 durchströmenden Gas gewonnen werden. Hierzu ist hinter dem Gasauslaß 27 eine Abzweigleitung 28 vorgesehen, über die ein Teil des aus dem Zyklon 5 austretenden Reduktionsgases abgeleitet wird. Dieses Gas wird gewaschen, verdichtet und dann als Kühlgas in das Aggregat 4 eingeblasen. Die Einstellung der einzelnen Mengen erfolgt über die Regelarmaturen 16 und 17.

Im Falle einer Gichtgasaufbereitung mit Hilfe eines Zyklons 3, eines Gebläses 8 und eines $CO_2$-Wäschers 10 kann die über die Rohrleitung 18 aus dem Kühlgaskreislauf abgezweigte Kühlgasmenge durch das aufbereitete Gichtgas mit Hilfe der Regelarmatur 30 eingestellt werden.

Das Gemisch des Reduktions- und Kühlgases wird zum Zyklon 5 geleitet, in dem die gröberen Partikel aus dem Gas ausgeschieden werden.

Diese Feststoffe bestehen im wesentlichen aus der Feinkornfraktion des Eisenschwamms und aus mit dem im Einschmelzvergaser erzeugten Gas mitgeführten Kokspartikeln. Der Austrag der Zyklone 5 und 6 wird dann über einen oder mehrere Staubbrenner 13 in den Einschmelzvergaser 1 vorzugsweise oberhalb der Wirbelschicht mit Hilfe des verdichteten Gichtgases, das zugleich als Transportgas für die Feststoffe dient, eingeblasen. Gleichzeitig mit dem Staub wird durch die Staubbrenner auch Sauerstoff eingeblasen.

Das von den Feststoffen befreite Reduktionsgas wird vom Gasauslaß 27 des Zyklons 5 zum Gaseinlaß 20 des Schachtofens 2 geführt.

Die zur Bildung und Aufrechterhaltung eines Kohlefließbettes im Einschmelzvergaser 1 erforderliche Kohlemenge wird diesem über ein Rohr 29 direkt zugegeben. Der an sich bekannte Einschmelzvergaser kann im Betriebszustand in drei Abschnitte unterteilt werden, nämlich in einen unteren Abschnitt, in dem sich flüssiges Roheisen und Schlacke befinden, in einen mittleren Abschnitt, der das Kohlefließbett enthält, und in einen erweiterten oberen Abschnitt, der als Beruhigungsraum dient. Dadurch, daß die Feinkornfraktion des Eisenschwamms nicht von oben in den Einschmelzvergaser 1 eingebracht wird, sondern über den seitlichen Einlaß 17 in Höhe des Kohlefließbettes, läßt sich die mit dem im Einschmelzvergaser erzeugten Gas wieder ausgetragene Feinkornmenge erheblich herabsetzen. Der Einschmelzvergaser 1 enthält im unteren Bereich noch nicht dargestellte Öffnungen für den Abstich des flüssigen Roheisens und der Schlacke. Das durch die Vergasung der Kohle mit dem sauerstoffhaltigen Gas im Einschmelzvergaser erzeugte Gas besteht im wesentlichen aus CO und gegebenenfalls $H_2$. Es ist daher vorzüglich als Reduktionsgas geeignet.

Die von der Feinkornfraktion des Eisenschwamms getrennte Grobkornfraktion gelangt gegen die Strömung des Kühlgases aus dem Windsichter 7 in das Kühl- bzw. Pufferaggregat 4. In diesem werden die Eisenschwammpartikel der Grobkornfraktion, die vorzugsweise größer als 5 mm sind, gesammelt und gegebenenfalls gekühlt. Sie werden über einen Auslaß entweder in heißem oder abgekühltem Zustand ausgetragen. Soll die Grobkornfraktion vor dem Austrag gekühlt werden, dann wird das Kühlgas über den unteren Einlaß 23 in das Aggregat 4 eingeblasen, so daß es die Grobkornfraktion durchströmt und diese abkühlt. Soll dagegen die Grobkornfraktion heiß ausgetragen werden, dann wird das Kühlgas über den oberen Gaseinlaß 24 eingeblasen. Dieser befindet sich oberhalb der im Aggregat 4 angesammelten Eisenschwammpartikel, so daß deren Temperatur durch das Kühlgas kaum beeinflußt wird. Dieses kann in diesem Fall auch noch vorgewärmt werden.

**Patentansprüche**

1. Verfahren zur Erzeugung von Eisenschwammpartikeln und flüssigem Roheisen aus stückigem Eisenerz, bei dem das Eisenerz in einem Direktreduktionsaggregat mittels eines Reduktionsgases zu Eisenschwamm reduziert wird, und die aus dem Direktreduktionsaggregat ausgetragenen Eisenschwammpartikel in eine Feinkornfraktion und in eine Grobkornfraktion getrennt werden, wobei die Feinkornfraktion einem Einschmelzvergaser zugeführt wird, in dem aus eingebrachter Kohle und eingeblasenem sauerstoffhaltigem Gas die zum Schmelzen der Feinkornfraktion des Eisenschwamms erforderliche Wärme sowie Reduktionsgas erzeugt werden, von dem wenigstens ein Teil in das Direktreduktionsaggregat eingeleitet wird, dadurch gekennzeichnet, daß die aus dem Direktreduktionsaggregat (2) ausgetragenen Eisenschwammpartikel zu deren Trennung in die Fein- und Grobkornfraktion in einen Windsichter (7) eingebracht werden, der im Gegenstrom zu den Eisenschwammpartikeln von einem Kühlgas mit einstellbarer Geschwindigkeit durchströmt wird.

2. Verfahren nach Anspruch 1, dadurch gekennzeichnet, daß ein Teil des Kühlgasstromes in einem Zyklon (6) grob entstaubt und nach Waschen, Kühlen und Verdichten wieder als Kühlgas verwendet wird, daß der andere Teil dem in einem Einschmelzvergaser (1) erzeugten Reduktionsgas zugemischt wird, daß das Gemisch aus Reduktions- und Kühlgas und die mit diesen mitgenommene Feinkornfraktion zu einem Zyklon (5) geführt werden und das von der Feinkornfraktion befreite Gasgemisch in das Direktreduktionsaggregat (2) geleitet wird, und daß die in den Zyklonen (5) und (6) ausgeschiedene Feinkornfraktion in den Einschmelzvergaser (1) eingeblasen wird.

3. Verfahren nach Anspruch 1 oder 2, dadurch gekennzeichnet, daß die Grobkornfraktion aus dem Windsichter (7) über ein Pufferaggregat (4) ausgetragen wird.

4. Verfahren nach Anspruch 3, dadurch gekennzeichnet, daß die Grobkornfraktion des Eisenschwamms nach dem Austritt aus dem Windsichter (7) in dem Pufferaggregat (4) abgekühlt wird.

5. Verfahren nach Anspruch 3, dadurch gekennzeichnet, daß die Grobkornfraktion des Eisenschwamms nach dem Austritt aus dem Windsichter (7) in das Pufferaggregat (4) gelangt und aus diesem heiß ausgetragen und anschließend heißbrikettiert oder heißkompaktiert wird.

6. Verfahren nach einem der Ansprüche 1 bis 5, dadurch gekennzeichnet, daß die Gasgeschwindigkeit im Windsichter (7) so gewählt wird, daß die Feinkornfraktion Eisenschwammpartikel bis zu einer Größe von ca. 5 mm enthält.

7. Verfahren nach einem der Ansprüche 1 bis 6, dadurch gekennzeichnet, daß das Kühlgas vor dem Eintritt in den Windsichter (7) zur Kühlung der Grobkornfraktion des Eisenschwamms verwendet wird.

8. Verfahren nach einem der Ansprüche 1 bis 7, dadurch gekennzeichnet, daß ein Teil des Kühlgases nach Austritt aus dem Windsichter (7) in einem Zyklon (6) entstaubt, im Wäscher (11) gewaschen und gekühlt vom Gebläse (9) verdichtet und als Kühlgas zur Kühlung der Grobkornfraktion des Eisenschwamms verwendet wird.

9. Verfahren nach einem der Ansprüche 1 bis 8, dadurch gekennzeichnet, daß das Kühlgas aus dem Windsichter (7) oder mindestens ein Teil dieses Gases dem Reduktionsgas aus dem Einschmelzvergaser (1) zur Temperatureinstellung beigemischt wird.

10. Verfahren nach einem der Ansprüche 1 bis 9, dadurch gekennzeichnet, daß das aus dem Kühlgaskreislauf abgezweigte Kühlgas durch das in einer $CO_2$-Wäsche (10) aufbereitete Gichtgas ersetzt wird.

11. Verfahren nach einem der Ansprüche 1 bis 10, dadurch gekennzeichnet, daß ein Teil des Reduktionsgases in einem Wäscher (11) gewaschen und gekühlt, vom Gebläse (9) verdichtet und als Kühlgas verwendet wird.

12. Verfahren nach einem der Ansprüche 1 bis 11, dadurch gekennzeichnet, daß die für die Trennung der Eisenschwammpartikel in die Fein- und Grobkornfraktion erforderliche Gasgeschwindigkeit im Windsichter (7) durch die Kühlgasmenge zum Pufferaggregat (4) eingestellt wird.

13. Verfahren nach einem der Ansprüche 1 bis 12, dadurch gekennzeichnet, daß die für die Trennung der Eisenschwammpartikel in die Fein- und Grobkornfraktion erforderliche Gasgeschwindigkeit im Windsichter (7) mit Hilfe der Regelarmatur (14) eingestellt wird.

14. Verfahren nach einem der Ansprüche 1 bis 13, dadurch gekennzeichnet, daß der in den Zyklonen (5) und (6) ausgeschiedene Reduktionsgasstaub und die Feinfraktion des Eisenschwamms über mindestens einen Straubbrenner (13) in den Einschmelzvergaser (1) mit Hilfe des Gicht- oder Kühlgases eingeblasen wird.

15. Verfahren nach einem der Ansprüche 1 bis 6, dadurch gekennzeichnet, daß zumindest ein Teil des Abgases des Direktreduktionsaggregats (2) nach Waschen und Kühlen in einem Wäscher (3) verdichtet und in den Einschmelzvergaser (1) eingeblasen wird.

16. Verfahren nach Anspruch 6, dadurch gekennzeichnet, daß das vorzugsweise vorgewärmte Kühlgas oberhalb der gesammelten Grobkornfraktion des Eisenschwamms in das Pufferaggregat (4) eingeblasen wird.

17. Vorrichtung zur Durchführung des Verfahrens nach einem der Ansprüche 1 bis 16, bei der das Direktreduktionsaggregat oberhalb des Einschmelzvergasers angeordnet ist und am unteren Ende eine Austragsvorrichtung für den heißen Eisenschwamm aufweist, dadurch gekennzeichnet, daß an die Austragsvorrichtung ein Windsichter (7) angeschlossen ist, der eine obere Austrittsöffnung (15) für die Feinkornfraktion zur Verbindung mit den Zyklonen (5) und (6) eine untere Austrittsöffnung für die Grobkornfraktion zur Verbindung mit dem Kühl- bzw. Pufferaggregat (4) aufweist.

**Claims**

1. Process for producing sponge iron particles and liquid pig iron from lump iron ore, wherein the iron ore is reduced to sponge iron in a direct reduction unit using a reduction gas, and the sponge iron particles that are discharged from the direct reduction unit are separated into a fine-grained fraction and a coarse-grained fraction, the fine-grained fraction being passed to a melt-down gasifier in which the heat needed to melt the fine-grained fraction of the sponge iron, as well as reduction gas, are produced from coal introduced into the gasifier and oxygenic gas blown into it, at least part of said reduction gas being conducted into the direct reduction unit, characterised in that the sponge iron particles discharged from the direct reduction unit (2) are introduced into an air separator (7) to separate them into the fine-grained and coarse-grained fractions, a cooling gas being passed through said air separator at an adjustable velocity countercurrently to the sponge iron particles.

2. Process according to Claim 1, characterised in that the coarser dust is extracted from a portion of the cooling gas stream in a cyclone (6), and after being scrubbed, cooled and compressed is re-used as cooling gas, that the other portion is mixed with the reduction gas produced in a melt-down gasifier (1), that the mixture of reduction and cooling gas and the fine-grained fraction entrained therewith are passed to a cyclone (5) and the gas mixture, from which the fine-grained fraction has now been liberated, is fed into the direct reduction unit (2), and that the fine-grained fraction removed in the cyclones (5) and (6) is blown into the melt-down gasifier (1).

3. Process according to Claim 1 or 2, characterised in that the coarse-grained fraction is discharged from the air separator (7) via a buffering unit (4).

4. Process according to Claim 3, characterised in that after it leaves the air separator (7) the coarse-grained fraction of the sponge iron is cooled in the buffering unit (4).

5. Process according to Claim 3, characterised in that after it leaves the air separator (7) the coarse-grained fraction of the sponge iron passes into the buffering unit (4) and is discharged hot therefrom and subsequently hot-briquetted or hot-compacted.

6. Process according to one of Claims 1 to 5, characterised in that the velocity of the gas in the air separator (7) is so selected that the fine-grained fraction contains sponge iron particles up to approx. 5 mm in size.

7. Process according to one of Claims 1 to 6, characterised in that before it enters the air separator (7) the cooling gas is used to cool the coarse-grained fraction of the sponge iron.

8. Process according to one of Claims 1 to 7, characterised in that after it leaves the air separator (7) a portion of the cooling gas is dedusted in a cyclone (6), scrubbed and cooled in the scrubber (11), compressed by the blower (9) and used as cooling gas to cool the coarse-grained fraction of the sponge iron.

9. Process according to one of Claims 1 to 8, characterised in that the cooling gas from the air separator (7) or at least a portion of said gas is mixed with the reduction gas from the melt-down gasifier (1) to adjust its temperature.

10. Process according to one of Claims 1 to 9, characterised in that the cooling gas diverted from the cooling gas circuit is replaced by the top gas prepared in a $CO_2$ scrubbing unit (10).

11. Process according to one of Claims 1 to 10, characterised in that a portion of the reduction gas is scrubbed and cooled in a scrubber (11), compressed by the blower (9), and used as cooling gas.

12. Process according to one of Claims 1 to 11, characterised in that the gas velocity needed for separating the sponge iron particles into the fine-grained and coarse-grained fractions is adjusted in the air separator (7) by the amount of cooling gas to the buffering unit (4).

13. Process according to one of Claims 1 to 12, characterised in that the gas velocity needed for separating the sponge iron particles into the fine-grained and coarse-grained fractions is adjusted in the air separator (7) with the help of the control fitting (14).

14. Process according to one of Claims 1 to 13, characterised in that the reduction gas dust extracted in the cyclones (5) and (6) and the fine-grained fraction of the sponge iron is blown via at least one dust burner (13) into the melt-down gasifier (1) with the help of the top or cooling gas.

15. Process according to one of Claims 1 to 6, characterised in that at least a portion of the waste gas from the direct reduction unit (2) is compressed after being scrubbed and cooled in a scrubber (3) and is blown into the melt-down gasifier (1).

16. Process according to Claim 6, characterised in that the preferably preheated cooling gas is blown into the buffering unit (4) above the collected coarse-grained fraction of the sponge iron.

17. Apparatus for carrying out the process according to one of Claims 1 to 16, wherein the direct reduction unit is arranged above the melt-down gasifier and has a discharge device at its bottom end for the hot sponge iron, characterised in that an air separator (7) is linked to the discharge device, said air separator having a top outlet opening (15) for the fine-grained fraction for connection to the cyclones (5) and (6) and a bottom outlet opening for the coarse-grained fraction for connection to the cooling and buffering unit (4).

**Revendications**

1. Procédé pour produire des particules de fer spongieux et de la fonte liquide à partir du minerai de fer en morceaux, consistant à réduire le minerai de fer en fer spongieux dans un appareil de réduction directe au moyen d'un gaz réducteur, et à séparer ensuite les particules de fer spongieux extraites de l'appareil de réduction directe en une fraction à grains fins et une fraction à gros grains, pour amener alors la fraction à grains fins à un gazéificateur de fusion, dans lequel on introduit aussi du charbon et un courant de gaz chargé d'oxygène, afin d'y produire la chaleur nécessaire pour fondre la fraction à grains fins du fer spongieux et d'y faire apparaître en même temps un gaz réducteur, dont on envoie au moins une partie dans l'appareil de réduction directe ; caractérisé en ce qu'on fait passer dans un séparateur à vent (7) les particules de fer spongieux extraites de l'appareil de réduction directe (2), pour séparer leur fraction à grains fins et leur fraction à gros grains, et en ce qu'on fait passer dans le séparateur à vent (7) un gaz de refroidissement dont la vitesse est réglable, et qui circule à contre-courant des particules de fer spongieux.

2. Procédé conforme à la revendication 1, caractérisé en ce qu'on dépoussière sommairement une partie du courant de gaz de refroidissement dans un séparateur à cyclone, pour l'utiliser à nouveau comme gaz de refroidissement, après lavage, refroidissement et compression, et en ce qu'on ajoute l'autre partie du gaz de refroidissement à un gaz réducteur produit dans un gazéificateur de fusion (1), pour obtenir un mélange de gaz réducteur et de gaz de refroidissement que l'on envoie dans un autre séparateur à cyclone (5) avec la fraction de particules à grains fins entraînées par ce mélange gazeux, tandis qu'on envoie dans l'appareil de réduction directe (2) le mélange gazeux libéré par la fraction de particules à grains fins, et qu'on injecte par soufflage dans le gazéificateur de fusion (1) la fraction de particules à grains fins qui a été retenue dans les séparateurs à cyclone (5) et (6).

3. Procédé conforme à l'une des revendications 1 ou 2, caractérisé en ce qu'on fait passer dans un bloc d'accumulation (4) la fraction de particules à gros grains extraite du séparateur à vent (7).

4. Procédé conforme à la revendication 3, caractérisé en ce qu'on refroidit la fraction de particules à gros grains du fer spongieux dans le bloc d'accumulation (4), après sa sortie du séparateur à vent (7).

5. Procédé conforme à la revendication 3, caractérisé en ce qu'on envoie dans le bloc d'accumulation (4) la fraction de particules à gros grains du fer spongieux, et en ce qu'on extrait à chaud cette fraction de particules du bloc d'accumulation (4), pour la soumettre directement à un traitement à chaud de mise en briquettes ou de compactage.

6. Procédé conforme à l'une des revendications 1 à 5, caractérisé en ce qu'on adopte pour la vitesse du gaz dans le séparateur à vent (7) une valeur telle que la fraction à grains fins contient des particules de fer spongieux dont le calibre va jusqu'à 5 mm environ.

7. Procédé conforme à l'une des revendications 1 à 6, caractérisé en ce qu'on utilise le gaz de refroidissement avant son entrée dans le séparateur à vent (7) pour refroidir la fraction à gros grains des particules de fer spongieux.

8. Procédé conforme à l'une des revendications 1 à 7, caractérisé en ce qu'on dépoussière une partie du gaz de refroidissement sortant du séparateur à vent (7), en la faisant passer dans un séparateur à cyclone (6), pour ensuite la laver et la refroidir dans un appareil de lavage (11) et ensuite la comprimer au moyen de la soufflante (9), afin de l'utiliser comme gaz de refroidissement pour refroidir la fraction à gros grains du fer spongieux.

9. Procédé conforme à l'une des revendications 1 à 8, caractérisé en ce qu'on mélange au moins une partie du gaz de refroidissement sortant du séparateur à vent (7) avec le gaz réducteur sortant du gazéificateur de fusion (1) pour en régler la température.

10. Procédé conforme à l'une des revendications 1 à 9, caractérisé en ce qu'on remplace le gaz de refroidissement prélevé en dérivation sur le circuit du gaz de refroidissement par un gaz de haut-fourneau préparé dans un appareil (10) de lavage de $CO_2$.

11. Procédé conforme à l'une des revendications 1 à 10, caractérisé en ce qu'on fait passer dans un appareil de lavage (11) une partie du gaz réducteur, pour la laver et la refroidir, en ce qu'on la comprime au moyen de la soufflante (9), et en ce qu'on l'utilise comme gaz de refroidissement.

12. Procédé conforme à l'une des revendications 1 à 11, caractérisé en ce qu'on règle dans le séparateur à vent (7) la vitesse du courant gazeux à la valeur nécessaire pour séparer les particules de fer spongieux en deux fractions à grains fins et à gros grains, en agissant sur le débit du gaz de refroidissement qui arrive dans le bloc d'accumulation (4).

13. Procédé conforme à l'une des revendications 1 à 12, caractérisé en ce qu'on règle dans le séparateur à vent (7) la vitesse du courant gazeux à la valeur nécessaire pour séparer les particules de fer spongieux en deux fractions à grains fins et à gros grains, au moyen d'une vanne de réglage (14).

14. Procédé conforme à l'une des revendications 1 à 13, caractérisé en ce que la poussière du gaz réducteur qui a été retenue dans les séparateurs à cyclone (5) et (6) est injectée par soufflage, ainsi que la fraction à grains fins du fer spongieux, dans le gazéificateur de fusion (1) par l'intermédiaire d'au moins un brûleur de poussier (13), au moyen d'un courant de gaz de haut-fourneau ou du gaz de refroidissement.

15. Procédé conforme à l'une des revendications 1 à 6, caractérisé en ce qu'on fait passer au moins une partie du gaz sortant du four de réduction directe (2) dans un appareil de lavage (3) pour la laver et la refroidir, puis en ce qu'on comprime ce gaz pour l'injecter dans le gazéificateur de fusion (1).

16. Procédé conforme à la revendication 6, caractérisé en ce que, de préférence après l'avoir réchauffé, on injecte le gaz de refroidissement dans le bloc d'accumulation (4) au-dessus de la fraction accumulée des particules à gros grains de fer spongieux.

17. Dispositif pour appliquer le procédé conforme à l'une des revendications 1 à 16, dans lequel le four de réduction directe est disposé au-dessus du gazéificateur de fusion et comporte à son extrémité inférieure un système d'extraction pour la sortie à chaud du fer spongieux ; caractérisé en ce qu'il comporte un séparateur à vent (7), relié au système d'extraction et présentant, à sa partie supérieure un orifice de sortie (15) pour le passage de la fraction à grains fins à envoyer aux séparateurs à cyclone (5) et (6) auxquels est relié cet orifice supérieur, et à sa partie inférieure, un autre orifice de sortie relié au bloc d'accumulation et de refroidissement (4), pour le passage de la fraction à gros grains à envoyer à ce bloc.